# EUROPEAN PATENT APPLICATION

(11) **EP 4 700 311 A1**
(43) Date of publication of application: **25.02.2026**
(21) Application number: 24791965.7
(22) Date of filing: 15.04.2024
(51) Int. Cl.: F25D 11/02, F25D 25/02, F25D 19/04, F25D 23/12, F25D 17/04, A23L 3/00

(54) **REFRIGERATOR**

(30) Priority: 17.04.2023 CN 202310409258
(71) Applicant: Qingdao Haier Refrigerator Co., Ltd., Laoshan District Qingdao Shandong 266101 (CN); Qingdao Haier Smart Technology R&D Co., Ltd., Qingdao, Shandong 266101 (CN); Haier Smart Home Co., Ltd., Qingdao, Shandong 266101 (CN)
(72) Inventor: LI, Mengcheng, Qingdao, Shandong 266101 (CN); ZHU, Xiaobing, Qingdao, Shandong 266101 (CN); FEI, Bin, Qingdao, Shandong 266101 (CN); ZHANG, Peng, Qingdao, Shandong 266101 (CN); LIU, Yang, Qingdao, Shandong 266101 (CN); LI, Runjie, Qingdao, Shandong 266101 (CN)
(74) Representative: Winter, Brandl - Partnerschaft mbB
(86) International application number: PCT/CN2024/087776
(87) International publication number: WO 2024/217380

(57) **Abstract**

The present application provides a refrigerator, including: a cabinet provided with at least one magnetic field preservation compartment; a magnetic field generating device configured to generate a magnetic field in a storage space of the magnetic field preservation compartment; and a refrigeration system configured to cool the magnetic field preservation compartment; wherein the magnetic field generating device is configured to maintain a magnetic field intensity range inside the storage space greater than or equal to 10 Gauss and less than or equal to 100 Gauss, and the refrigeration system is configured to maintain a temperature inside the storage space in a range of greater than or equal to -10°C and less than or equal to 0°C; or, the magnetic field generating device is configured to maintain a magnetic field intensity range inside the storage space greater than or equal to 5 Gauss and less than or equal to 40 Gauss, and the refrigeration system is configured to maintain a temperature inside the storage space in a range of greater than or equal to -30°C and less than or equal to -15°C. This enables food ingredients to be refrigerated at below-zero temperatures, or reduces the formation of large ice crystals inside food ingredients during freezing, thereby improving storage effects.

## Description

This application is based on and claims priority to Chinese Patent Application No. CN202310409258.6, filed on April 17, 2023, the entire contents of which are incorporated herein by reference.

### TECHNICAL FIELD

The present application relates to the field of refrigeration and freezing technology, and particularly relates to a refrigerator.

### BACKGROUND

As a common household appliance, a refrigerator can store food at low temperatures to extend the storage period of food. With the improvement of people's living standards, people are becoming increasingly concerned about the storage duration and preservation effect of refrigerators. Specifically, for refrigerated storage of food ingredients, since the temperature must be maintained above zero degrees, it is difficult to further extend the storage period. For frozen storage of food ingredients, there is a problem of deteriorating texture of frozen meat ingredients, mainly because during the freezing storage process, the internal moisture of meat ingredients will freeze and form sharp large ice crystals, which pierce the cells of meat ingredients. When the meat is thawed, the pierced cells will lose juice, resulting in loss of nutrients and deterioration of texture.

Any prior art mentioned in the specification does not constitute an acknowledgment or suggestion that such prior art forms part of the common general knowledge in any jurisdiction or could reasonably be expected to be understood, regarded as relevant and/or combined with other prior art by a person skilled in the art.

### SUMMARY

An object of the present application is to provide a refrigerator that can solve any of the above problems.

Specifically, the present application provides a refrigerator, including:
a cabinet, wherein the cabinet is provided with at least one magnetic field preservation compartment;
a magnetic field generating device configured to generate a magnetic field in a storage space of the magnetic field preservation compartment; and
a refrigeration system configured to cool the magnetic field preservation compartment;
wherein the magnetic field generating device is configured to maintain a magnetic field intensity range inside the storage space greater than or equal to 10 Gauss and less than or equal to 100 Gauss, and the refrigeration system is configured to maintain a temperature inside the storage space in a range of greater than or equal to -10° C and less than or equal to 0° C; or
wherein the magnetic field generating device is configured to maintain a magnetic field intensity range inside the storage space greater than or equal to 5 Gauss and less than or equal to 40 Gauss, and the refrigeration system is configured to maintain a temperature inside the storage space in a range of greater than or equal to -30° C and less than or equal to -15° C.

Optionally, the magnetic field generating device is configured to maintain a magnetic field intensity range inside the storage space greater than or equal to 30 Gauss and less than or equal to 60 Gauss, and the refrigeration system is configured to maintain a temperature inside the storage space in a range of greater than or equal to -10° C and less than or equal to 0° C.

Optionally, the magnetic field generating device is configured to maintain a magnetic field intensity range inside the storage space greater than or equal to 10 Gauss and less than or equal to 20 Gauss, and the refrigeration system is configured to maintain a temperature inside the storage space in a range of greater than or equal to -30° C and less than or equal to -15° C.

Optionally, the refrigeration system includes an evaporator and a fan, the magnetic field preservation compartment is provided with a preservation air inlet and a return air outlet, and air generated by the fan enters the magnetic field preservation compartment through the preservation air inlet and flows out of the magnetic field preservation compartment through the return air outlet to cool the magnetic field preservation compartment.

Optionally, the cabinet is provided with a refrigeration compartment and a refrigeration cooling chamber, the refrigeration system is arranged in the refrigeration cooling chamber to cool the refrigeration compartment;
the magnetic field preservation compartment is arranged in the refrigeration compartment, the preservation air inlet and the return air outlet of the magnetic field preservation compartment are in communication with the refrigeration cooling chamber to enable the refrigeration system arranged in the refrigeration cooling chamber to cool the magnetic field preservation compartment;
the magnetic field generating device is configured to maintain a magnetic field intensity range inside the storage space greater than or equal to 10 Gauss and less than or equal to 100 Gauss, and the refrigeration system is configured to maintain a temperature inside the storage space in a range of greater than or equal to -10° C and less than or equal to 0° C.

Optionally, the cabinet is provided with a variable temperature compartment and a variable temperature cooling chamber, the refrigeration system is arranged in the variable temperature cooling chamber to cool the variable temperature compartment;
the magnetic field preservation compartment is arranged in the variable temperature compartment, the preservation air inlet and the return air outlet of the magnetic field preservation compartment are in communication with the variable temperature cooling chamber to enable the refrigeration system arranged in the variable temperature cooling chamber to cool the magnetic field preservation compartment;
the magnetic field generating device is configured to maintain a magnetic field intensity range inside the storage space greater than or equal to 10 Gauss and less than or equal to 100 Gauss, and the refrigeration system is configured to maintain a temperature inside the storage space in a range of greater than or equal to -10° C and less than or equal to 0° C; or
the magnetic field generating device is configured to maintain a magnetic field intensity range inside the storage space greater than or equal to 5 Gauss and less than or equal to 40 Gauss, and the refrigeration system is configured to maintain a temperature inside the storage space in a range of greater than or equal to -30° C and less than or equal to -15 ° C.

Optionally, the cabinet is provided with a freezing compartment and a freezing cooling chamber, the refrigeration system is arranged in the freezing cooling chamber to cool the freezing compartment;
the magnetic field preservation compartment is arranged in the freezing compartment, the preservation air inlet and the return air outlet of the magnetic field preservation compartment are in communication with the freezing cooling chamber to enable the refrigeration system arranged in the freezing cooling chamber to cool the magnetic field preservation compartment;
the magnetic field generating device is configured to maintain a magnetic field intensity range inside the storage space greater than or equal to 5 Gauss and less than or equal to 40 Gauss, and the refrigeration system is configured to maintain a temperature inside the storage space in a range of greater than or equal to -30° C and less than or equal to -15° C.

Optionally, the cabinet is provided with a refrigeration compartment, a freezing compartment, a refrigeration cooling chamber and a freezing cooling chamber;
the refrigerator includes two sets of refrigeration systems, one set of refrigeration system is arranged in the refrigeration cooling chamber to cool the refrigeration compartment, and another set of refrigeration system is arranged in the freezing cooling chamber to cool the freezing compartment;
the magnetic field preservation compartment is arranged in the refrigeration compartment, the preservation air inlet and the return air outlet of the magnetic field preservation compartment are respectively in communication with the freezing cooling chamber to enable the refrigeration system arranged in the freezing cooling chamber to cool the magnetic field preservation compartment;
the magnetic field generating device is configured to maintain a magnetic field intensity range inside the storage space greater than or equal to 10 Gauss and less than or equal to 100 Gauss, and the refrigeration system is configured to maintain a temperature inside the storage space in a range of greater than or equal to -10° C and less than or equal to 0° C.

Optionally, the refrigerator is a French door refrigerator, the French door refrigerator includes a first compartment, a second compartment, and a third compartment, the first compartment, the second compartment and the third compartment are distributed from top to bottom;
the first compartment is a refrigeration compartment, the second compartment is a variable temperature compartment or a freezing compartment, and the third compartment is a freezing compartment;
the magnetic field preservation compartment is arranged in at least one of the first compartment, the second compartment and the third compartment.

Optionally, the refrigerator is a T-type refrigerator, the T-type refrigerator includes a first compartment, a second compartment, and a third compartment, the second compartment and the third compartment are distributed in a left-right direction, and the first compartment is arranged above the second compartment and the third compartment;
the first compartment is a refrigeration compartment, the second compartment is a variable temperature compartment or a freezing compartment, and the third compartment is a freezing compartment;
the magnetic field preservation compartment is arranged in at least one of the first compartment, the second compartment and the third compartment.

Optionally, the magnetic field preservation compartment is arranged in the second compartment or the third compartment;
the second compartment or the third compartment is provided with multiple magnetic field preservation compartments, the multiple magnetic field preservation compartments are distributed in a vertical direction, and the magnetic field generating device is arranged at both a top and a bottom of the storage space of each magnetic field preservation compartment.

Optionally, the refrigerator includes at least one storage component, the storage component is arranged in the magnetic field preservation compartment, the storage component forms the storage space, and cold air entering the magnetic field preservation compartment flows around the storage component.

Optionally, the storage component is a drawer, the magnetic field generating device is arranged at a top of the drawer and has a gap with a top wall of the magnetic field preservation compartment;
the preservation air inlet is arranged on a rear wall of the magnetic field preservation compartment and is located between the magnetic field generating device and the top wall of the magnetic field preservation compartment.

Optionally, the magnetic field preservation compartment is provided with two magnetic field generating devices, and the two magnetic field generating devices are respectively arranged on opposite sides of the storage space.

Optionally, a magnetic pole distribution direction of the two magnetic field generating devices is parallel to a distribution direction of the two magnetic field generating devices, and the magnetic pole directions of the two magnetic field generating devices are the same.

The refrigerator of the present application is provided with a magnetic field preservation compartment, wherein a magnetic field generating device generates a magnetic field in a storage space of the magnetic field preservation compartment, thereby subjecting food ingredients stored in the storage space to magnetic field effects. Furthermore, the magnetic field generating device is configured to maintain a magnetic field intensity range inside the storage space greater than or equal to 10 Gauss and less than or equal to 100 Gauss, and the refrigeration system is configured to maintain a temperature range inside the storage space greater than or equal to -10° C and less than or equal to 0° C, which not only enables food ingredients to be refrigerated at below-zero temperatures but also maintains unfrozen refrigeration for a relatively longer period, thereby lowering the refrigeration temperature of food ingredients and helping to extend their refrigerated storage period. Moreover, the magnetic field intensity range of greater than or equal to 10 Gauss and less than or equal to 100 Gauss, and temperature range of greater than or equal to -10° C and less than or equal to 0° C provide a relatively longer unfrozen storage period. Below -10° C, the freezing rate of food ingredients increases significantly. Alternatively, the magnetic field generating device is configured to maintain a magnetic field intensity range inside the storage space greater than or equal to 5 Gauss and less than or equal to 40 Gauss, and the refrigeration system is configured to maintain a temperature range inside the storage space greater than or equal to -30° C and less than or equal to -15 ° C, thereby ensuring food ingredients are subjected to sufficient magnetic field intensity and lower temperature effects, assisting food ingredients to quickly enter frozen state, reducing the formation of large ice crystals inside food ingredients, thus reducing damage to food ingredient cells caused by ice crystals, helping to reduce juice loss after thawing, thereby reducing nutrient loss and maintaining food texture. Moreover, the magnetic field intensity range of greater than or equal to 5 Gauss and less than or equal to 40 Gauss, and temperature range of greater than or equal to -30° C and less than or equal to -15° C provide relatively better ice crystal reduction effects. Furthermore, temperatures below -30° C place too high demands on the refrigerator's cooling system, resulting in excessive implementation costs. Above -15 ° C, the autotrophic rate of unsaturated fatty acids in food ingredients is relatively fast, significantly reducing food preservation effects.

Based on the detailed description of specific embodiments of the present application in conjunction with the accompanying drawings below, those skilled in the art will better understand the above and other objects, advantages, and features of the present application.

The terms "comprise", and variations thereof such as "comprises", "comprised", "comprising", "including", "containing", unless explicitly required otherwise by the context, do not exclude other features, components, elements, or steps.

### BRIEF DESCRIPTION OF THE DRAWINGS

Some specific embodiments of the present application will be described in detail below with reference to the accompanying drawings in an exemplary rather than limiting manner. The same reference numerals in the drawings indicate the same or similar components or parts. Those skilled in the art should understand that these drawings are not necessarily drawn to scale. In the drawings:
Fig. 1 is a schematic view of a refrigerator according to an embodiment of the present application;
Fig. 2 is a schematic sectional view of a refrigerator according to an embodiment of the present application;
Fig. 3 is a partial schematic view of a refrigerator according to an embodiment of the present application;
Fig. 4 is a schematic view of a magnetic field generating device in a refrigerator according to an embodiment of the present application;
Fig. 5 is a schematic sectional view of a refrigerator according to another embodiment of the present application;
Fig. 6 is a schematic sectional view of a refrigerator according to yet another embodiment of the present application;
Fig. 7 is a schematic view of a refrigerator according to yet another embodiment of the present application;
Fig. 8 is a schematic sectional view of a refrigerator according to yet another embodiment of the present application;
Fig. 9 is a schematic curve diagram showing the relationship between juice loss of food ingredients and magnetic field intensity at -18° C according to an embodiment of the present application.

### DETAILED DESCRIPTION

It should be understood by those skilled in the art that the embodiments described below are only a portion of the embodiments of the present application, not all embodiments of the present application. This portion of embodiments is intended to explain the technical principles of the present application, rather than limiting the scope of protection of the present application. Based on the embodiments provided by the present application, all other embodiments obtained by those skilled in the art without creative labor should still fall within the scope of protection of the present application.

In the description of this embodiment, it needs to be understood that terms such as "center", "up", "down", "front", "back", "left", "right", "vertical", "horizontal", "top", "bottom", "inner", "outer" indicating directional or positional relationships are based on the directional or positional relationships shown in the drawings, are merely for convenience of description and simplification of description, and do not indicate or imply that the referred device or element must have a specific orientation, be constructed and operated in a specific orientation, therefore should not be understood as limitations of the present application.

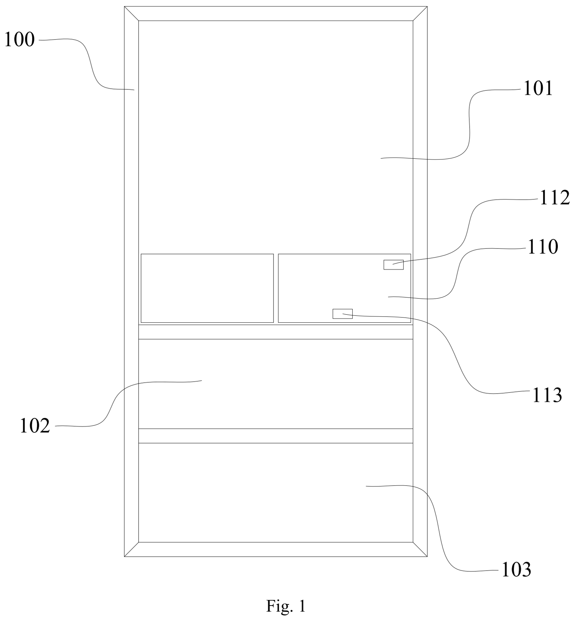

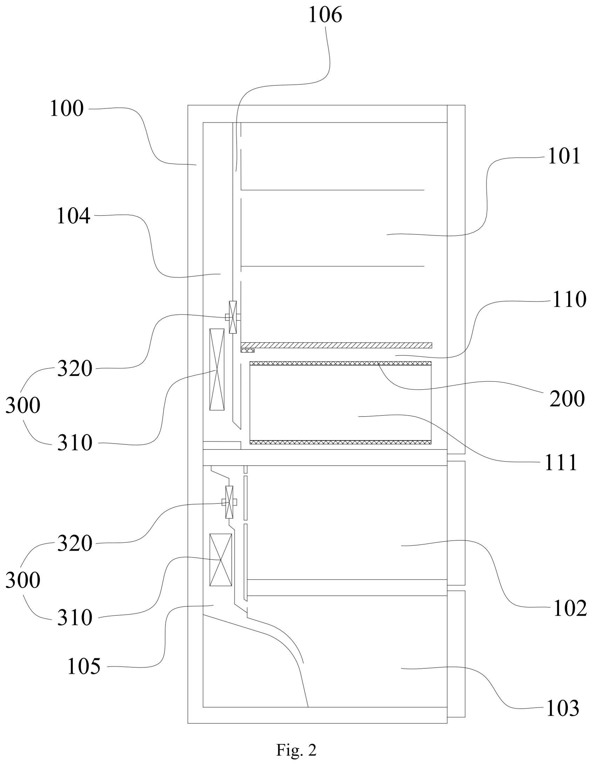

As shown in Figs. 1 and 2, in one embodiment, the refrigerator includes a cabinet 100, a magnetic field generating device 200 and a refrigeration system 300. The cabinet 100 is provided with a magnetic field preservation compartment 110. The magnetic field generating device 200 is configured to generate a magnetic field in a storage space 111 of the magnetic field preservation compartment 110. The refrigeration system 300 is configured to cool the magnetic field preservation compartment 110. The magnetic field generating device 200 is configured to maintain a magnetic field intensity range inside the storage space 111 greater than or equal to 10 Gauss and less than or equal to 100 Gauss, and the refrigeration system 300 is configured to maintain a temperature range inside the storage space 111 greater than or equal to -10° C and less than or equal to 0° C.

Referring to Figs. 1 and 2, specifically, the refrigeration system 300 includes an evaporator 310 and a fan 320. The magnetic field preservation compartment 110 is provided with a preservation air inlet 112 and a return air outlet 113, and air generated by the fan 320 enters the magnetic field preservation compartment 110 through the preservation air inlet 112 and flows out of the magnetic field preservation compartment 110 through the return air outlet 113 to cool the magnetic field preservation compartment 110.

Referring further to Figs. 1 to 3, specifically, the refrigerator is a French door refrigerator, and the cabinet 100 of the French door refrigerator is provided with a first compartment 101, a second compartment 102, and a third compartment 103. The first compartment 101, the second compartment 102, and the third compartment 103 are distributed from top to bottom. Among them, the first compartment 101 is a refrigeration compartment, the second compartment 102 is a variable temperature compartment, and the third compartment 103 is a freezing compartment.

The French door refrigerator also includes a first cooling chamber 104 and a second cooling chamber 105. The refrigerator includes two sets of refrigeration systems 300, one set of refrigeration system 300 is arranged in the first cooling chamber 104 to cool the first compartment 101. Another set of refrigeration system 300 is arranged in the second cooling chamber 105 to cool the second compartment 102 and the third compartment 103. One magnetic field preservation compartment 110 is arranged in the first compartment 101, that is, in the refrigeration compartment.

The first cooling chamber 104 of the French door refrigerator is arranged at the rear side of the first compartment 101. For the evaporator 310 and fan 320 of the refrigeration system 300 arranged in the first cooling chamber 104, the evaporator 310 generates cooling capacity in the first cooling chamber 104, and the fan 320 generates cold air carrying cooling capacity, and the cold air cools the first compartment 101. There is an air guide duct 106 between the first compartment 101 and the first cooling chamber 104, the air guide duct 106 is provided with multiple air inlets communicating with the first compartment 101, the cold air formed by the fan 320 enters the air guide duct 106, and then enters the first compartment 101 through multiple air inlets provided in the air guide duct 106 that communicate with the first compartment 101, to cool the first compartment 101.

Continuing to refer to Figs. 1 to 3, furthermore, the magnetic field preservation compartment 110 is arranged at the lower right of the first compartment 101, which is a relatively enclosed space separated by a temperature isolation board. The preservation air inlet 112 of the magnetic field preservation compartment 110 is one of the multiple air inlets of the air guide duct 106, enabling the cold air generated by the fan 320 to enter the magnetic field preservation compartment 110. The return air outlet 113 connects the magnetic field preservation compartment 110 and the first cooling chamber 104, enabling the cold air entering the magnetic field preservation compartment 110 to flow back to the first cooling chamber 104 through the return air outlet 113, thereby forming circulating air in the magnetic field preservation compartment 110 to cool the magnetic field preservation compartment 110.

For areas of the first compartment 101 other than the magnetic field preservation compartment 110, cold air can enter these areas through air inlets on the air guide duct 106 other than the preservation air inlet 112, and the cold air that enters these areas can also return to the first cooling chamber 104 through the return air outlet 113.

Continuing to refer to Figs. 1 to 3, furthermore, the second cooling chamber 105 is arranged at the rear side of the second compartment 102 and the third compartment 103. The second compartment 102 is provided with an air inlet and a return air outlet communicating with the second cooling chamber 105, and the third compartment 103 is also provided with an air inlet and a return air outlet communicating with the second cooling chamber 105. Therefore, for the evaporator 310 and fan 320 of the refrigeration system 300 arranged in the second cooling chamber 105, the evaporator 310 generates cooling capacity in the second cooling chamber 105, and the fan 320 generates cold air carrying cooling capacity. The cold air cools the second compartment 102 through the air inlet and return air outlet of the second compartment 102. The cold air cools the third compartment 103 through the air inlet and return air outlet of the third compartment 103.

Referring to Figs. 2 to 4, the refrigerator includes a storage component 400, the storage component 400 is arranged in the magnetic field preservation compartment 110, and the storage component 400 forms the storage space 111. Specifically, the storage component 400 is a drawer, which is slidably arranged in the magnetic field preservation compartment 110.

Referring to Figs. 2 to 4, furthermore, the magnetic field preservation compartment 110 is provided with two magnetic field generating devices 200, and the two magnetic field generating devices 200 are respectively arranged on opposite sides of the storage space 111. Specifically, the two magnetic field generating devices 200 are respectively arranged at the top and bottom of the drawer. The magnetic field generating device 200 includes a magnetic member 210 and a magnetic guide plate 220. The magnetic member 210 is used to generate a magnetic field in the storage space 111, and the magnetic guide plate 220 is used to guide the magnetic field generated by the magnetic member 210 to make the magnetic field distribute more uniformly in the storage space 111.

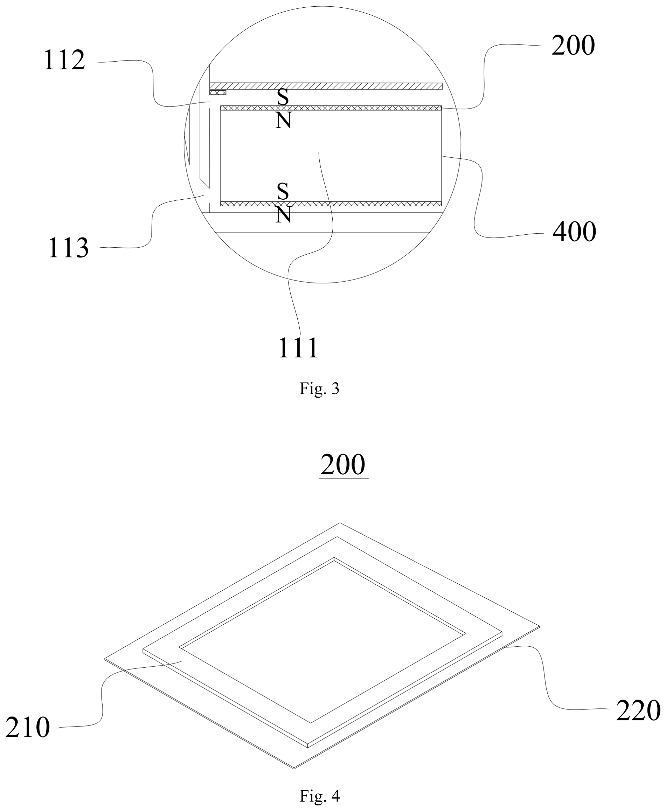

Referring to Fig. 3, preferably, the magnetic pole distribution direction of the two magnetic field generating devices 200 is parallel to the distribution direction of the two magnetic field generating devices 200, and the magnetic pole directions of the two magnetic field generating devices 200 are the same. Specifically, the two magnetic field generating devices 200 are respectively arranged at the top and bottom of the drawer, that is, distributed in the vertical direction. Therefore, the N pole and S pole of each magnetic field generating device 200 are also distributed in the vertical direction. Moreover, the magnetic pole directions of the two magnetic field generating devices 200 are the same, specifically, the N poles of both magnetic field generating devices 200 are below their S poles.

It should be noted that the magnetic field preservation compartment 110 may also not be provided with the storage component 400, that is, the entire space of the magnetic field preservation compartment 110 serves as the storage space.

It should also be noted that the magnetic field preservation compartment 110 may also be provided with one or more than two magnetic field generating devices 200.

It should be noted that the magnetic member 210 may be a permanent magnet piece. It may also be an electric coil, where the energized electric coil generates a magnetic field. Additionally, the magnetic field generating device 200 may also only include the magnetic member.

It should be noted that the magnetic pole directions of the two magnetic field generating devices 200 may also be different.

It should be noted that multiple magnetic field preservation compartments may also be arranged in the first compartment 101. For example, both the lower left and lower right areas may be magnetic field preservation compartments.

Referring to Figs. 1 to 3, the magnetic field generating device 200 is configured to maintain the magnetic field intensity range in the storage space 111 greater than or equal to 10 Gauss and less than or equal to 100 Gauss, meaning that even at the point of minimum magnetic field intensity in the magnetic field preservation compartment 110 is greater than or equal to 10 Gauss, and at the point of maximum intensity is less than or equal to 100 Gauss. For example, the magnetic field intensity at a certain point in the storage space 111 can be 10 Gauss, 20 Gauss, 30 Gauss, 40 Gauss, 50 Gauss, 60 Gauss, 70 Gauss, 80 Gauss, 90 Gauss, 100 Gauss, etc. Preferably, the magnetic field intensity range is greater than or equal to 30 Gauss and less than or equal to 60 Gauss.

Furthermore, the refrigeration system 300 used to cool the magnetic field preservation compartment 110 is configured to maintain the temperature inside the storage space 111 in a range of greater than or equal to -10° C and less than or equal to 0° C. For example, the temperature inside the storage space 111 can be -10° C, -4° C, -3° C, -2° C, - 1 ° C, 0° C, etc. Preferably, the refrigeration system 300 is configured to maintain the temperature inside the storage space 111 in a range of greater than or equal to -5 ° C and less than or equal to -2° C. Specifically, a temperature sensor is provided inside the storage space 111, and the temperature inside the storage space 111 is the detection value of the temperature sensor.

In this embodiment, by arranging the magnetic field preservation compartment 110 in the first compartment 101, that is, the refrigeration compartment, the magnetic field generating device 200 generates a magnetic field in the storage space 111 of the magnetic field preservation compartment 110, thereby subjecting food ingredients stored in the storage space 111 to magnetic field effects. Furthermore, the magnetic field generating device 200 is configured to maintain the magnetic field intensity range inside the storage space 111 greater than or equal to 10 Gauss and less than or equal to 100 Gauss, and the refrigeration system 300 is configured to maintain the temperature range inside the storage space 111 greater than or equal to -10° C and less than or equal to 0° C, which not only enables food ingredients to be refrigerated at below-zero temperatures but also maintains unfrozen refrigeration for a relatively longer period, thereby lowering the refrigeration temperature of food ingredients and helping to extend their refrigerated storage period. Moreover, the magnetic field intensity range of greater than or equal to 10 Gauss and less than or equal to 100 Gauss, and temperature range of greater than or equal to -10° C and less than or equal to 0° C provide a relatively longer unfrozen storage period. Below -10° C, the freezing rate of food ingredients increases significantly.

It should be noted that in one embodiment, the magnetic field generating device 200 is configured to maintain the magnetic field intensity range in the storage space 111 greater than or equal to 10 Gauss and less than or equal to 20 Gauss, and the refrigeration system 300 is configured to maintain the temperature inside the storage space 111 in a range of greater than or equal to -3° C and less than or equal to -1° C. This enables food ingredients to have a relatively longer non-freezing storage time and better preservation effects.

It should be noted that in one embodiment, the magnetic field generating device 200 is configured to maintain the magnetic field intensity range in the storage space 111 greater than or equal to 30 Gauss and less than or equal to 60 Gauss, and the refrigeration system 300 is configured to maintain the temperature inside the storage space 111 in a range of greater than or equal to -5° C and less than or equal to -2° C. When food ingredients are stored at temperatures 1-2 ° C below their initial freezing point, microbial activity significantly decreases, and most bacteria cannot grow. Since the initial freezing point of most food ingredients is around -0.5° C to -2° C, therefore, the magnetic field intensity range of greater than or equal to 30 Gauss and less than or equal to 60 Gauss, combined with the temperature inside the storage space 111 being in a range of greater than or equal to -5 ° C and less than or equal to -2 ° C, enables food ingredients to remain unfrozen while meeting the optimal temperature requirements below the initial freezing point of most food ingredients. Furthermore, -5° C is higher than the lowest supercooling point of most food ingredients under a magnetic field intensity range of greater than or equal to 30 Gauss and less than or equal to 60 Gauss, providing optimal refrigeration effect for food ingredients, resulting in relatively longer non-freezing storage time and better preservation effects.

Preferably, the magnetic field generating device 200 is configured to maintain the magnetic field intensity range in the storage space 111 greater than or equal to 35 Gauss and less than or equal to 45 Gauss, and the refrigeration system 300 is configured to maintain the temperature inside the storage space 111 in a range of greater than or equal to -5° C and less than or equal to -2° C.

As shown in Figs. 2 and 3, furthermore, the cold air entering the magnetic field preservation compartment 110 flows around the storage component 400. Specifically, the magnetic field generating device 200 is arranged at the top of the drawer and has a gap with the top wall of the magnetic field preservation compartment 110. The preservation air inlet 112 is located on the rear wall of the magnetic field preservation compartment 110, and is located between the magnetic field generating device 200 and the top wall of the magnetic field preservation compartment 110.

Specifically, when the drawer is retracted into the magnetic field preservation compartment 110, that is, in storage state, the magnetic field generating device 200 covers the top opening of the drawer. There is a gap between the magnetic field generating device 200 and the top wall of the magnetic field preservation compartment 110, thereby forming an air path extending from the rear end to the front end of the drawer, and the preservation air inlet 112 of the magnetic field preservation compartment 110 faces the air path between the magnetic field generating device 200 and the top wall of the magnetic field preservation compartment 110. The cold air entering the magnetic field preservation compartment 110 through the preservation air inlet 112 flows forward along the air path, flows downward after reaching the front end of the drawer. Then, it flows backward from the bottom of the drawer until flowing out through the return air outlet 113, forming an airflow around the storage component 400.

By making the cold air entering the magnetic field preservation compartment 110 flow around the storage component 400, it effectively avoids direct cold air blowing on food ingredients, preventing the temperature of food ingredients from being far below the temperature of the magnetic field preservation compartment 110, which would affect the storage effect of food ingredients.

It should be noted that the storage component 400 can also be a storage box that can be sealed, thereby making the cold air flow around the storage component 400.

It should be noted that both the second compartment and the third compartment of the French door refrigerator can also be freezing compartments.

It should be noted that the refrigerator does not have to be a French door refrigerator. Specifically, for refrigerators with a refrigeration compartment: the cabinet is provided with a refrigeration compartment and a refrigeration cooling chamber, the refrigeration system is arranged in the refrigeration cooling chamber to cool the refrigeration compartment; the magnetic field preservation compartment is arranged in the refrigeration compartment, the preservation air inlet and the return air outlet of the magnetic field preservation compartment are in communication with the refrigeration cooling chamber to enable the refrigeration system arranged in the refrigeration cooling chamber to cool the magnetic field preservation compartment. Furthermore, the magnetic field generating device is configured to maintain a magnetic field intensity range inside the storage space greater than or equal to 10 Gauss and less than or equal to 100 Gauss, and the refrigeration system is configured to maintain a temperature inside the storage space in a range of greater than or equal to -10° C and less than or equal to 0° C.

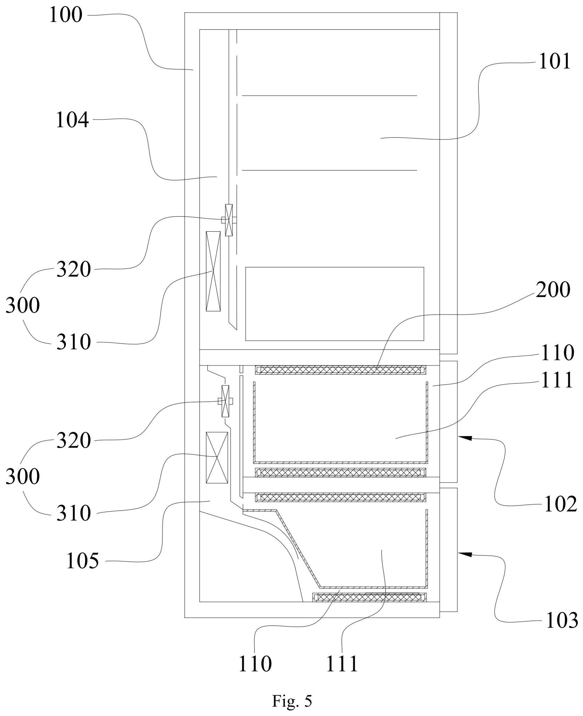

As shown in Figs. 1 and 5, in one embodiment, the refrigerator is a French door refrigerator, and the cabinet of the French door refrigerator is provided with a first compartment 101, a second compartment 102, and a third compartment 103. The first compartment 101, the second compartment 102, and the third compartment 103 are distributed from top to bottom. Among them, the first compartment 101 is a refrigeration compartment, the second compartment 102 is a variable temperature compartment, and the third compartment 103 is a freezing compartment.

The French door refrigerator also includes a first cooling chamber 104 and a second cooling chamber 105. The refrigerator includes two sets of refrigeration systems 300, one set of refrigeration system 300 is arranged in the first cooling chamber 104 to cool the first compartment 101. Another set of refrigeration system 300 is arranged in the second cooling chamber 105 to cool the second compartment 102 and the third compartment 103. One magnetic field preservation compartment 110 is arranged in the second compartment 102, one magnetic field preservation compartment 110 is arranged in the second compartment 102 and the third compartment 103, that is, in the variable temperature compartment and freezing compartment.

The first cooling chamber 104 is arranged at the rear side of the first compartment 101. For the evaporator 310 and fan 320 of the refrigeration system 300 arranged in the first cooling chamber 104, the evaporator 310 generates cooling capacity in the first cooling chamber 104, and the fan 320 generates cold air carrying cooling capacity, and the cold air cools the first compartment 101.

Continuing to refer to Figs. 1 and 5, furthermore, the second cooling chamber 105 is arranged at the rear side of the second compartment 102 and the third compartment 103. The preservation air inlet and return air outlet of the magnetic field preservation compartment 110 arranged in the second compartment 102 are in communication with the second cooling chamber 105, and the preservation air inlet and return air outlet of the magnetic field preservation compartment 110 arranged in the third compartment 103 are also in communication with the second cooling chamber 105. Therefore, for the evaporator 310 and fan 320 of the refrigeration system 300 arranged in the second cooling chamber 105, the evaporator 310 generates cooling capacity in the second cooling chamber 105, and the fan 320 generates cold air carrying cooling capacity. The cold air can respectively cool the magnetic field preservation compartment 110 arranged in the second compartment 102 and the magnetic field preservation compartment 110 arranged in the third compartment 103.

For the magnetic field preservation compartment 110 in the third compartment 103, the magnetic field generating device 200 is configured to maintain the magnetic field intensity range inside the storage space 111 greater than or equal to 5 Gauss and less than or equal to 40 Gauss, and the refrigeration system 300 is configured to maintain the temperature inside the storage space 111 in a range of greater than or equal to -30° C and less than or equal to -15° C.

Specifically, the magnetic field generating device 200 is configured so that even at the point of minimum magnetic field intensity in the storage space 111 is greater than or equal to 5 Gauss, and at the point of maximum intensity is less than or equal to 40 Gauss. For example, the magnetic field intensity at a certain point in the storage space 111 can be 5 Gauss, 8 Gauss, 10 Gauss, 16 Gauss, 20 Gauss, 30 Gauss, 37 Gauss, 40 Gauss, etc. Preferably, the magnetic field intensity range is greater than or equal to 10 Gauss and less than or equal to 20 Gauss. Furthermore, the refrigeration system 300 used to cool the magnetic field preservation compartment 110 is configured to maintain the temperature inside the storage space 111 in a range of greater than or equal to -30° C and less than or equal to -15° C. For example, the temperature inside the storage space 111 can be -30° C, -25° C, -20° C, -18 ° C, -16° C, - 15° C, etc. Preferably, the refrigeration system 300 is configured to maintain the temperature inside the storage space 111 in a range of greater than or equal to -25° C and less than or equal to -18 ° C. Specifically, a temperature sensor is provided inside the storage space 111, and the temperature inside the storage space 111 is the detection value of the temperature sensor.

It should be noted that in one embodiment, the magnetic field generating device 200 is configured to maintain the magnetic field intensity range inside the storage space 111 greater than or equal to 10 Gauss and less than or equal to 20 Gauss, and the refrigeration system 300 is configured to maintain the temperature inside the storage space 111 in a range of greater than or equal to -25° C and less than or equal to -18° C. Under the conditions where the magnetic field intensity range is greater than or equal to 10 Gauss and less than or equal to 20 Gauss, and the temperature inside the storage space 111 is in a range of greater than or equal to -25° C and less than or equal to -18° C, the preservation effect of food ingredients is relatively better.

It should be noted that in one embodiment, the magnetic field generating device 200 is configured to maintain the magnetic field intensity range inside the storage space 111 greater than or equal to 15 Gauss and less than or equal to 20 Gauss, and the refrigeration system 300 is configured to maintain the temperature inside the storage space 111 in a range of greater than or equal to -25° C and less than or equal to -18° C. Under the conditions where the magnetic field intensity range is greater than or equal to 15 Gauss and less than or equal to 20 Gauss, and the temperature inside the storage space 111 is in a range of greater than or equal to -25° C and less than or equal to -18° C, the preservation effect of food ingredients is even better.

For the magnetic field preservation compartment 110 in the second compartment 102, the magnetic field generating device 200 is configured to maintain the magnetic field intensity range inside the storage space 111 greater than or equal to 10 Gauss and less than or equal to 100 Gauss, and the refrigeration system 300 is configured to maintain the temperature inside the storage space 111 in a range of greater than or equal to -10° C and less than or equal to 0° C. Alternatively, the magnetic field generating device 200 is configured to maintain the magnetic field intensity range inside the storage space 111 greater than or equal to 5 Gauss and less than or equal to 40 Gauss, and the refrigeration system 300 is configured to maintain the temperature inside the storage space 111 in a range of greater than or equal to - 30° C and less than or equal to -15° C.

In other words, for the magnetic field preservation compartment 110 in the second compartment 102, it can be either configured so that the magnetic field generating device 200 makes the magnetic field intensity range inside the storage space 111 greater than or equal to 10 Gauss and less than or equal to 100 Gauss, with the refrigeration system 300 making the temperature inside the storage space 111 in a range of greater than or equal to -10° C and less than or equal to 0° C. Or, it can be configured so that the magnetic field generating device 200 makes the magnetic field intensity range inside the storage space 111 greater than or equal to 5 Gauss and less than or equal to 40 Gauss, with the refrigeration system 300 making the temperature inside the storage space 111 in a range of greater than or equal to -30° C and less than or equal to -15 ° C.

In this embodiment, by arranging the magnetic field preservation compartment 110 in the freezing compartment of the refrigerator, the magnetic field generating device 200 generates a magnetic field in the storage space 111 of the magnetic field preservation compartment 110, thereby subjecting food ingredients stored in the storage space 111 to magnetic field effects. Furthermore, the magnetic field generating device 200 is configured to maintain the magnetic field intensity range inside the storage space 111 greater than or equal to 5 Gauss and less than or equal to 40 Gauss, and the refrigeration system 300 is configured to maintain the temperature range inside the storage space 111 greater than or equal to -30° C and less than or equal to -15 ° C, thereby ensuring food ingredients are subjected to sufficient magnetic field intensity and lower temperature effects, assisting food ingredients to quickly enter frozen state, reducing the formation of large ice crystals inside food ingredients, thus reducing damage to food ingredient cells caused by ice crystals, helping to reduce juice loss after thawing, thereby reducing nutrient loss and maintaining food texture. Moreover, the magnetic field intensity range of greater than or equal to 5 Gauss and less than or equal to 40 Gauss, and temperature range of greater than or equal to -30° C and less than or equal to -15° C provide relatively better ice crystal reduction effects. Furthermore, temperatures below -30° C place too high demands on the refrigerator's cooling system, resulting in excessive implementation costs. Above -15 ° C, the autotrophic rate of unsaturated fatty acids in food ingredients is relatively fast, significantly reducing food preservation effects.

By arranging the magnetic field preservation compartment 110 in the variable temperature compartment of the refrigerator, the magnetic field generating device 200 generates a magnetic field in the storage space 111 of the magnetic field preservation compartment 110, thereby subjecting food ingredients stored in the storage space 111 to magnetic field effects. Furthermore, the magnetic field generating device 200 is configured to maintain the magnetic field intensity range inside the storage space 111 greater than or equal to 10 Gauss and less than or equal to 100 Gauss, and the refrigeration system 300 is configured to maintain the temperature inside the storage space 111 in a range of greater than or equal to - 10° C and less than or equal to 0° C. Alternatively, the magnetic field generating device 200 is configured to maintain the magnetic field intensity range inside the storage space 111 greater than or equal to 5 Gauss and less than or equal to 40 Gauss, and the refrigeration system 300 is configured to maintain the temperature range inside the storage space 111 greater than or equal to -30° C and less than or equal to -15 ° C, allowing flexible implementation of magnetic field refrigeration or magnetic field freezing effects as needed.

It should be noted that the second compartment 102 may also be provided with multiple magnetic field preservation compartments, for example, two magnetic field preservation compartments distributed left and right. Or, the third compartment 103 may also be provided with multiple magnetic field preservation compartments, for example, two magnetic field preservation compartments distributed left and right.

It should be noted that both the second compartment and the third compartment of the French door refrigerator can also be freezing compartments.

It should be noted that the refrigerator does not have to be a French door refrigerator. Specifically, for refrigerators with a variable temperature compartment: the cabinet is provided with a variable temperature compartment and a variable temperature cooling chamber, the refrigeration system is arranged in the variable temperature cooling chamber to cool the variable temperature compartment; the magnetic field preservation compartment is arranged in the variable temperature compartment, the preservation air inlet and the return air outlet of the magnetic field preservation compartment are in communication with the variable temperature cooling chamber to enable the refrigeration system arranged in the variable temperature cooling chamber to cool the magnetic field preservation compartment. The magnetic field generating device is configured to maintain a magnetic field intensity range inside the storage space greater than or equal to 10 Gauss and less than or equal to 100 Gauss, and the refrigeration system is configured to maintain a temperature inside the storage space in a range of greater than or equal to -10° C and less than or equal to 0° C; or, the magnetic field generating device is configured to maintain a magnetic field intensity range inside the storage space greater than or equal to 5 Gauss and less than or equal to 40 Gauss, and the refrigeration system is configured to maintain a temperature inside the storage space in a range of greater than or equal to -30° C and less than or equal to -15 ° C.

It should also be noted that for refrigerators with a freezing compartment: the cabinet is provided with a freezing compartment and a freezing cooling chamber, the refrigeration system is arranged in the freezing cooling chamber to cool the freezing compartment; the magnetic field preservation compartment is arranged in the freezing compartment, the preservation air inlet and the return air outlet of the magnetic field preservation compartment are in communication with the freezing cooling chamber to enable the refrigeration system arranged in the freezing cooling chamber to cool the magnetic field preservation compartment. The magnetic field generating device is configured to maintain a magnetic field intensity range inside the storage space greater than or equal to 5 Gauss and less than or equal to 40 Gauss, and the refrigeration system is configured to maintain a temperature inside the storage space in a range of greater than or equal to -30° C and less than or equal to -15° C.

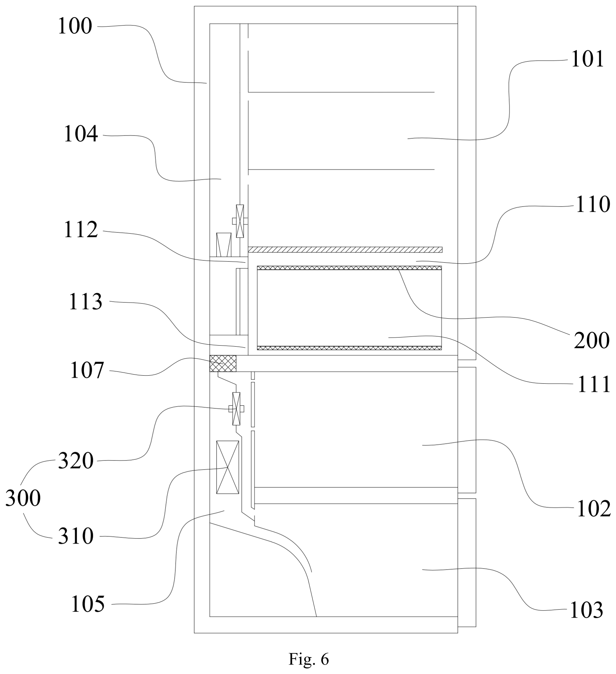

As shown in Figs. 1 and 6, in one embodiment, the refrigerator is a French door refrigerator, and the cabinet of the French door refrigerator is provided with a first compartment 101, a second compartment 102, and a third compartment 103. The first compartment 101, the second compartment 102, and the third compartment 103 are distributed from top to bottom. Among them, the first compartment 101 is a refrigeration compartment, the second compartment 102 is a variable temperature compartment, and the third compartment 103 is a freezing compartment.

The French door refrigerator also includes a first cooling chamber 104 and a second cooling chamber 105. The refrigerator includes two sets of refrigeration systems 300, one set of refrigeration system 300 is arranged in the first cooling chamber 104 to cool the first compartment 101. Another set of refrigeration system 300 is arranged in the second cooling chamber 105 to cool the second compartment 102 and the third compartment 103. One magnetic field preservation compartment 110 is arranged in the first compartment 101, that is, in the refrigeration compartment.

The first compartment 101, second compartment 102, and third compartment 103 of the French door refrigerator are distributed from top to bottom. The first cooling chamber 104 is arranged at the rear side of the first compartment 101. For the evaporator 310 and fan 320 of the refrigeration system 300 arranged in the first cooling chamber 104, the evaporator 310 generates cooling capacity in the first cooling chamber 104, and the fan 320 generates cold air carrying cooling capacity, and the cold air cools the first compartment 101.

Continuing to refer to Figs. 1 and 6, furthermore, the second cooling chamber 105 is arranged at the rear side of the second compartment 102 and the third compartment 103. The second compartment 102 is provided with an air inlet and a return air outlet communicating with the second cooling chamber 105, and the third compartment 103 is also provided with an air inlet and a return air outlet communicating with the second cooling chamber 105. Therefore, for the evaporator 310 and fan 320 of the refrigeration system 300 arranged in the second cooling chamber 105, the evaporator 310 generates cooling capacity in the second cooling chamber 105, and the fan 320 generates cold air carrying cooling capacity. The cold air cools the second compartment 102 through the air inlet and return air outlet of the second compartment 102. The cold air cools the third compartment 103 through the air inlet and return air outlet of the third compartment 103.

Furthermore, the magnetic field preservation compartment 110 is arranged at the lower right of the first compartment 101. Two communication holes 107 are provided between the first cooling chamber 104 and the second cooling chamber 105. The preservation air inlet 112 and return air outlet 113 of the magnetic field preservation compartment 110 are respectively in communication with the two communication holes 107, thereby enabling the refrigeration system 300 in the second cooling chamber 105 to cool both the second compartment 102 and the third compartment 103, as well as the magnetic field preservation compartment 110 in the first compartment 101.

Furthermore, the magnetic field generating device 200 is configured to maintain the magnetic field intensity range inside the storage space 111 greater than or equal to 10 Gauss and less than or equal to 100 Gauss, and the refrigeration system 300 is configured to maintain the temperature inside the storage space in a range of greater than or equal to -10° C and less than or equal to 0° C.

It should be noted that both the second compartment and the third compartment of the French door refrigerator can also be freezing compartments.

It should be noted that the refrigerator does not have to be a French door refrigerator. Specifically, for refrigerators with a refrigeration compartment and a freezing compartment: the cabinet is provided with a refrigeration compartment, a freezing compartment, a refrigeration cooling chamber and a freezing cooling chamber; the refrigerator includes two sets of refrigeration systems, one set of refrigeration system is arranged in the refrigeration cooling chamber to cool the refrigeration compartment, and another set of refrigeration system is arranged in the freezing cooling chamber to cool the freezing compartment; the magnetic field preservation compartment is arranged in the refrigeration compartment, the preservation air inlet and the return air outlet of the magnetic field preservation compartment are respectively in communication with the freezing cooling chamber to enable the refrigeration system arranged in the freezing cooling chamber to cool the magnetic field preservation compartment. The magnetic field generating device is configured to maintain a magnetic field intensity range inside the storage space greater than or equal to 10 Gauss and less than or equal to 100 Gauss, and the refrigeration system is configured to maintain a temperature inside the storage space in a range of greater than or equal to -10° C and less than or equal to 0° C.

It should be noted that for French door refrigerators, the magnetic field preservation compartment can be arranged in at least one of the first compartment, the second compartment and the third compartment. For example, it can be arranged only in the first compartment; or only in the second compartment; or only in the third compartment; or in both the first compartment and the third compartment; or in both the first compartment and the second compartment; or in all three compartments: the first compartment, the second compartment and the third compartment.

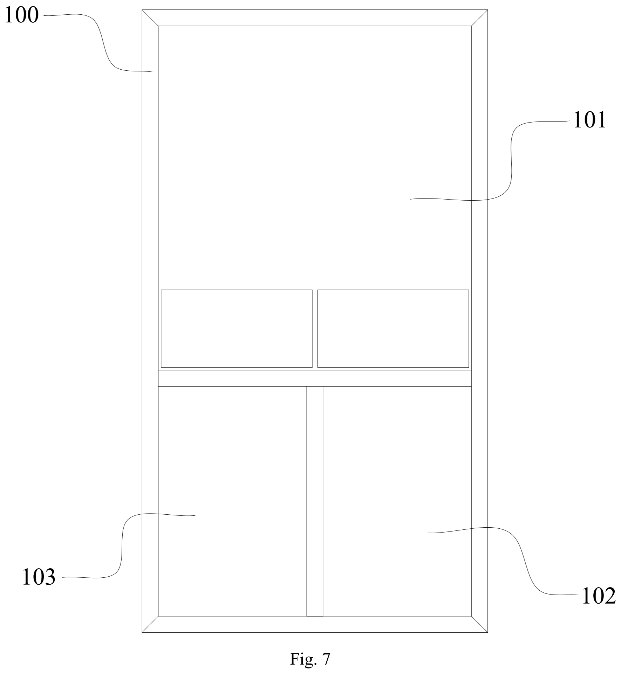

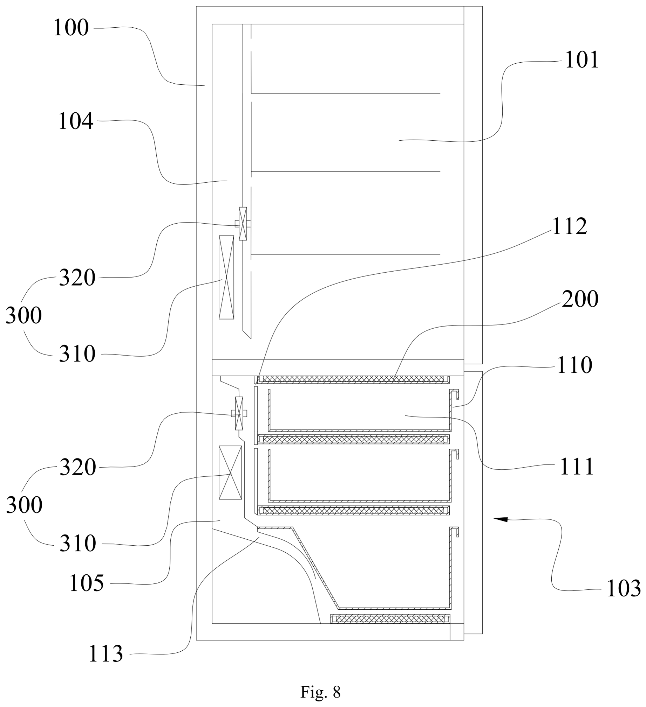

As shown in Figs. 7 and 8, in one embodiment, the refrigerator is a T-type refrigerator, the T-type refrigerator includes a first compartment 101, a second compartment 102, and a third compartment 103. The second compartment 102 and the third compartment 103 are distributed in a left-right direction, and the first compartment 101 is arranged above the second compartment 102 and the third compartment 103. The first compartment 101 is a refrigeration compartment, the second compartment 102 is a variable temperature compartment, and the third compartment 103 is a freezing compartment.

The T-type refrigerator also includes a first cooling chamber 104 and a second cooling chamber 105. The refrigerator includes two sets of refrigeration systems 300, one set of refrigeration system 300 is arranged in the first cooling chamber 104 to cool the first compartment 101. Another set of refrigeration system 300 is arranged in the second cooling chamber to cool the second compartment 102 and the third compartment 103. Three magnetic field preservation compartments 110 are arranged in the third compartment 103, that is, in the freezing compartment.

Referring to Figs. 7 and 8, specifically, the first cooling chamber 104 is arranged at the rear side of the first compartment 101. For the evaporator 310 and fan 320 of the refrigeration system 300 arranged in the first cooling chamber 104, the evaporator 310 generates cooling capacity in the first cooling chamber 104, and the fan 320 generates cold air carrying cooling capacity, and the cold air cools the first compartment 101.

Continuing to refer to Figs. 7 and 8, furthermore, the second cooling chamber 105 is arranged at the rear side of the second compartment 102 and the third compartment 103. The second compartment 102 is provided with an air inlet and a return air outlet communicating with the second cooling chamber 105, and the third compartment 103 is also provided with an air inlet and a return air outlet communicating with the second cooling chamber 105. Therefore, for the evaporator 310 and fan 320 of the refrigeration system 300 arranged in the second cooling chamber 105, the evaporator 310 generates cooling capacity in the second cooling chamber 105, and the fan 320 generates cold air carrying cooling capacity. The cold air cools the second compartment 102 through the air inlet and return air outlet of the second compartment 102. The cold air cools the third compartment 103 through the air inlet and return air outlet of the third compartment 103.

Furthermore, the three magnetic field preservation compartments 110 are distributed in a vertical direction, and each magnetic field preservation compartment 110 is provided with magnetic field generating devices 200 at both the top and bottom of the storage space 111. Each magnetic field preservation compartment 110 is provided with a preservation air inlet 112, and they share one return air outlet 113, enabling the refrigeration system 300 arranged in the second cooling chamber 105 to cool each magnetic field preservation compartment 110 through the respective preservation air inlet 112.

Furthermore, for the magnetic field preservation compartments 110 in the third compartment 103, the magnetic field generating device 200 is configured to maintain the magnetic field intensity range inside the storage space greater than or equal to 5 Gauss and less than or equal to 40 Gauss, and the refrigeration system 300 is configured to maintain the temperature inside the storage space in a range of greater than or equal to -30° C and less than or equal to -15 ° C.

Specifically, the magnetic field generating device 200 is configured so that even at the point of minimum magnetic field intensity in the magnetic field preservation compartment 110 is greater than or equal to 5 Gauss, and at the point of maximum intensity is less than or equal to 40 Gauss. For example, the magnetic field intensity at a certain point in the storage space 111 can be 5 Gauss, 8 Gauss, 10 Gauss, 16 Gauss, 20 Gauss, 30 Gauss, 37 Gauss, 40 Gauss, etc. Preferably, the magnetic field intensity range is greater than or equal to 10 Gauss and less than or equal to 20 Gauss. Furthermore, the refrigeration system 300 used to cool the magnetic field preservation compartment 110 is configured to maintain the temperature inside the storage space 111 in a range of greater than or equal to -30° C and less than or equal to -15° C. For example, the temperature inside the storage space 111 can be -30° C, -25° C, -20° C, -18° C, -16° C, -15° C, etc. Preferably, the refrigeration system 300 is configured to maintain the temperature inside the storage space 111 in a range of greater than or equal to -25° C and less than or equal to -18° C. Specifically, a temperature sensor is provided inside the storage space 111, and the temperature inside the storage space 111 is the detection value of the temperature sensor.

Preferably, since the three magnetic field preservation compartments 110 are distributed in a vertical direction, and each magnetic field preservation compartment 110 has magnetic field generating devices 200 at both the top and bottom of the storage space 111, adjacent magnetic field preservation compartments 110 can share one magnetic field generating device 200. For example, the magnetic field generating device 200 at the bottom of the uppermost magnetic field preservation compartment 110 can serve as both the bottom magnetic field generating device 200 for the uppermost compartment and the top magnetic field generating device 200 for the middle compartment.

Preferably, the magnetic pole distribution direction of each magnetic field generating device 200 is parallel to the distribution direction of multiple magnetic field generating devices 200, and the magnetic pole directions of multiple magnetic field generating devices 200 are the same.

It should be noted that the magnetic pole directions of multiple magnetic field generating devices 200 may not all be the same.

It should be noted that one, two, or more than three magnetic field preservation compartments can be arranged in the freezing compartment.

It should be noted that the second compartment 102 can be on the right with the third compartment 103 on the left, or the second compartment 102 can be on the left with the third compartment 103 on the right.

It should be noted that both the second compartment and the third compartment of the T-type refrigerator can also be freezing compartments.

It should be noted that for T-type refrigerators, there can also be three cooling chambers and three sets of refrigeration systems, with the three sets of refrigeration systems respectively arranged in the three cooling chambers and used to cool the first compartment, second compartment, and third compartment respectively.

It should be noted that for T-type refrigerators, the magnetic field preservation compartment can be arranged in at least one of the first compartment, second compartment, and third compartment. For example, only in the first compartment; or only in the second compartment; or only in the third compartment; or in both the first compartment and third compartment; or in both the first compartment and second compartment; or in both the second compartment and third compartment; or in all three compartments: the first compartment, second compartment, and third compartment.

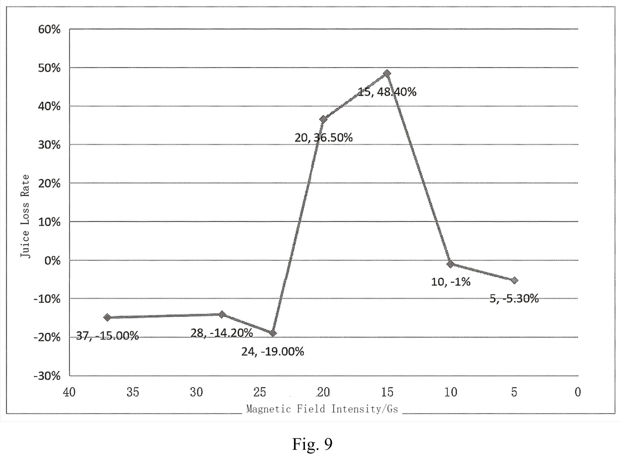

In one embodiment, referring to Fig. 9, it shows the relationship between juice loss rate of food ingredients and magnetic field intensity at a temperature of -18° C and the same storage time. The vertical axis represents the change in juice loss rate compared to a reference value, where 0% on the vertical axis represents the reference value position, above indicates improvement compared to the reference value, and below indicates deterioration compared to the reference value. Experimental data shows that when the magnetic field intensity is in the range of greater than or equal to 10 Gauss and less than or equal to 20 Gauss, the juice loss rate after food thawing significantly improves, especially in the range of greater than or equal to 15 Gauss and less than or equal to 20 Gauss. In the temperature range of -30° C to -15° C, the juice loss rate of food ingredients generally maintains the same trend as shown in the drawing.

At this point, those skilled in the art should recognize that although multiple exemplary embodiments of the present application have been shown and described in detail, many other variations or modifications that conform to the principles of the present application can still be directly determined or derived from the contents disclosed in this application without departing from the spirit and scope of the present application. Therefore, the scope of the present application should be understood and recognized as covering all such other variations or modifications.

## Claims

1. A refrigerator, comprising:
a cabinet, wherein the cabinet is provided with at least one magnetic field preservation compartment;
a magnetic field generating device configured to generate a magnetic field in a storage space of the magnetic field preservation compartment; and
a refrigeration system configured to cool the magnetic field preservation compartment;
wherein the magnetic field generating device is configured to maintain a magnetic field intensity range inside the storage space greater than or equal to 10 Gauss and less than or equal to 100 Gauss, and the refrigeration system is configured to maintain a temperature inside the storage space in a range of greater than or equal to -10°C and less than or equal to 0°C; or
wherein the magnetic field generating device is configured to maintain a magnetic field intensity range inside the storage space greater than or equal to 5 Gauss and less than or equal to 40 Gauss, and the refrigeration system is configured to maintain a temperature inside the storage space in a range of greater than or equal to -30°C and less than or equal to -15°C.

2. The refrigerator according to claim 1, wherein the magnetic field generating device is configured to maintain a magnetic field intensity range inside the storage space greater than or equal to 30 Gauss and less than or equal to 60 Gauss, and the refrigeration system is configured to maintain a temperature inside the storage space in a range of greater than or equal to -10°C and less than or equal to 0°C.

3. The refrigerator according to claim 1 or 2, wherein the magnetic field generating device is configured to maintain a magnetic field intensity range inside the storage space greater than or equal to 10 Gauss and less than or equal to 20 Gauss, and the refrigeration system is configured to maintain a temperature inside the storage space in a range of greater than or equal to -30°C and less than or equal to -15°C.

4. The refrigerator according to any one of claims 1 to 3, wherein the refrigeration system comprises an evaporator and a fan, the magnetic field preservation compartment is provided with a preservation air inlet and a return air outlet, and air generated by the fan enters the magnetic field preservation compartment through the preservation air inlet and flows out of the magnetic field preservation compartment through the return air outlet to cool the magnetic field preservation compartment.

5. The refrigerator according to any one of claims 1 to 4, wherein the cabinet is provided with a refrigeration compartment and a refrigeration cooling chamber, the refrigeration system is arranged in the refrigeration cooling chamber to cool the refrigeration compartment;
the magnetic field preservation compartment is arranged in the refrigeration compartment, the preservation air inlet and the return air outlet of the magnetic field preservation compartment are in communication with the refrigeration cooling chamber to enable the refrigeration system arranged in the refrigeration cooling chamber to cool the magnetic field preservation compartment;
the magnetic field generating device is configured to maintain a magnetic field intensity range inside the storage space greater than or equal to 10 Gauss and less than or equal to 100 Gauss, and the refrigeration system is configured to maintain a temperature inside the storage space in a range of greater than or equal to -10°C and less than or equal to 0°C.

6. The refrigerator according to any one of claims 1 to 4, wherein the cabinet is provided with a variable temperature compartment and a variable temperature cooling chamber, the refrigeration system is arranged in the variable temperature cooling chamber to cool the variable temperature compartment;
the magnetic field preservation compartment is arranged in the variable temperature compartment, the preservation air inlet and the return air outlet of the magnetic field preservation compartment are in communication with the variable temperature cooling chamber to enable the refrigeration system arranged in the variable temperature cooling chamber to cool the magnetic field preservation compartment;
the magnetic field generating device is configured to maintain a magnetic field intensity range inside the storage space greater than or equal to 10 Gauss and less than or equal to 100 Gauss, and the refrigeration system is configured to maintain a temperature inside the storage space in a range of greater than or equal to -10°C and less than or equal to 0°C; or
the magnetic field generating device is configured to maintain a magnetic field intensity range inside the storage space greater than or equal to 5 Gauss and less than or equal to 40 Gauss, and the refrigeration system is configured to maintain a temperature inside the storage space in a range of greater than or equal to -30°C and less than or equal to -15°C.

7. The refrigerator according to any one of claims 1 to 4, wherein the cabinet is provided with a freezing compartment and a freezing cooling chamber, the refrigeration system is arranged in the freezing cooling chamber to cool the freezing compartment;
the magnetic field preservation compartment is arranged in the freezing compartment, the preservation air inlet and the return air outlet of the magnetic field preservation compartment are in communication with the freezing cooling chamber to enable the refrigeration system arranged in the freezing cooling chamber to cool the magnetic field preservation compartment;
the magnetic field generating device is configured to maintain a magnetic field intensity range inside the storage space greater than or equal to 5 Gauss and less than or equal to 40 Gauss, and the refrigeration system is configured to maintain a temperature inside the storage space in a range of greater than or equal to -30°C and less than or equal to -15°C.

8. The refrigerator according to any one of claims 1 to 4, wherein the cabinet is provided with a refrigeration compartment, a freezing compartment, a refrigeration cooling chamber and a freezing cooling chamber;
the refrigerator comprises two sets of refrigeration systems, one set of refrigeration system is arranged in the refrigeration cooling chamber to cool the refrigeration compartment, and another set of refrigeration system is arranged in the freezing cooling chamber to cool the freezing compartment;
the magnetic field preservation compartment is arranged in the refrigeration compartment, the preservation air inlet and the return air outlet of the magnetic field preservation compartment are respectively in communication with the freezing cooling chamber to enable the refrigeration system arranged in the freezing cooling chamber to cool the magnetic field preservation compartment;
the magnetic field generating device is configured to maintain a magnetic field intensity range inside the storage space greater than or equal to 10 Gauss and less than or equal to 100 Gauss, and the refrigeration system is configured to maintain a temperature inside the storage space in a range of greater than or equal to -10°C and less than or equal to 0°C.

9. The refrigerator according to any one of claims 1 to 4, wherein the refrigerator is a French door refrigerator, the French door refrigerator comprises a first compartment, a second compartment, and a third compartment, the first compartment, the second compartment and the third compartment are distributed from top to bottom;
the first compartment is a refrigeration compartment, the second compartment is a variable temperature compartment or a freezing compartment, and the third compartment is a freezing compartment;
the magnetic field preservation compartment is arranged in at least one of the first compartment, the second compartment and the third compartment.

10. The refrigerator according to any one of claims 1 to 4, wherein the refrigerator is a T-type refrigerator, the T-type refrigerator comprises a first compartment, a second compartment, and a third compartment, the second compartment and the third compartment are distributed in a left-right direction, and the first compartment is arranged above the second compartment and the third compartment;
the first compartment is a refrigeration compartment, the second compartment is a variable temperature compartment or a freezing compartment, and the third compartment is a freezing compartment;
the magnetic field preservation compartment is arranged in at least one of the first compartment, the second compartment and the third compartment.

11. The refrigerator according to claim 10, wherein the magnetic field preservation compartment is arranged in the second compartment or the third compartment;
the second compartment or the third compartment is provided with multiple magnetic field preservation compartments, the multiple magnetic field preservation compartments are distributed in a vertical direction, and the magnetic field generating device is arranged at both a top and a bottom of the storage space of each magnetic field preservation compartment.

12. The refrigerator according to any one of claims 1 to 4, wherein the refrigerator comprises at least one storage component, the storage component is arranged in the magnetic field preservation compartment, the storage component forms the storage space, and cold air entering the magnetic field preservation compartment flows around the storage component.

13. The refrigerator according to claim 12, wherein the storage component is a drawer, the magnetic field generating device is arranged at a top of the drawer and has a gap with a top wall of the magnetic field preservation compartment;
the preservation air inlet is arranged on a rear wall of the magnetic field preservation compartment and is located between the magnetic field generating device and the top wall of the magnetic field preservation compartment.

14. The refrigerator according to any one of claims 1 to 4, wherein the magnetic field preservation compartment is provided with two magnetic field generating devices, and the two magnetic field generating devices are respectively arranged on opposite sides of the storage space.

15. The refrigerator according to claim 14, wherein a magnetic pole distribution direction of the two magnetic field generating devices is parallel to a distribution direction of the two magnetic field generating devices, and the magnetic pole directions of the two magnetic field generating devices are the same.
